# FASCICULE DE BREVET EUROPEEN

(11) **EP 2 643 069 B1**
(45) Date de publication et mention de la délivrance du brevet: **03.02.2016**
(21) Numéro de dépôt: 11799782.5
(22) Date de dépôt: 25.11.2011
(51) Int. Cl.: B01D 45/14, F01D 9/06, F01D 25/18

(54) **DISPOSITIF D'EVACUATION D'HUILE ET TURBOMACHINE COMPRENANT UN TEL DISPOSITIF**
VORRICHTUNG ZUM ÖLABFÜHREN UND TURBOMASCHINE MIT SOLCHER VORRICHTUNG
OIL DISCHARGE DEVICE AND TURBOMACHINE COMPRISING SUCH A DEVICE

(30) Priorité: 26.11.2010 FR 1059816
(43) Date de publication de la demande: 02.10.2013
(73) Titulaire: SNECMA, 75015 Paris (FR)
(72) Inventeur: ROCHE, Amandine, F-91160 Longjumeau (FR); BART, Jacques, René, F-91450 Soisy Sur Seine (FR); GAUTHIER, Gérard, Philippe, F-77430 Champagne Sur Seine (FR)
(74) Mandataire: Gevers France
(86) Numéro de dépôt international: PCT/FR2011/052771
(87) Numéro de publication internationale: WO 2012/069772

(56) Documents cités:
- EP-A1- 0 780 546
- EP-A1- 2 085 579
- US-A- 5 201 845

## Description

L'invention concerne le domaine de l'aéronautique et, plus particulièrement, un dispositif d'évacuation des fuites d'huile d'une enceinte d'huile située dans la partie aval d'un moteur à turbine à gaz.

Sur les moteurs à turbine à gaz, les paliers lubrifiés et refroidis à l'huile sont contenus dans des enceintes dont la fonction est d'empêcher l'huile de s'échapper dans le moteur. Les fuites d'huile y sont toutefois fréquentes à bas régimes, du fait de la faible pressurisation des étanchéités aux bornes des enceintes d'huile. Une fuite d'huile peut également survenir dans le cas d'un noyage d'enceinte (par exemple du fait de l'obturation de ligne de récupération d'huile, de la panne de la pompe de récupération de l'huile, etc.).

Afin d'évacuer l'huile lors d'une telle fuite, il est connu d'utiliser des moyens d'évacuation d'huile agencés pour autoriser l'évacuation d'au moins une partie de l'huile contenue dans l'enceinte d'huile vers l'extérieur du moteur lorsque le niveau de ladite enceinte dépasse un niveau seuil. Pour faciliter l'évacuation de l'huile lorsque celle-ci est autorisée, des moyens d'entraînement de l'huile sont prévus pour laisser passer un flux d'air dont l'écoulement entraîne l'évacuation de l'huile vers l'extérieur, par exemple par perçage de la virole rotor ou noyage du carter d'huile (« sump flooding »).

Ces moyens d'entraînement peuvent être du type « perçages de viroles rotor». Celles-ci permettent, lors d'une fuite, à faire cheminer l'air huilé jusqu'à la virole interne de turbine. Cet air-huilé est expulsé par centrifugation directement en veine primaire. Il s'ensuit la nécessité de mettre en place des surveillances particulières (sondes de sur-températures) dans ces zones pour couvrir le risque de feu d'huile si les parois en proximité de la fuite d'huile (notamment les viroles de turbines) peuvent entraîner son auto-inflammation.

Pour limiter ce défaut, il est connu du document de brevet FR 2 926 738, de la société SNECMA, un système de noyage d'enceinte (appelé « sump flooding »), qui consiste munir les moyens d'entraînement d'un capot de fermeture, ventilé spécifiquement et équipé d'un ou plusieurs orifices destinés à évacuer l'air (ou air-huilé en cas de fuite d'huile) dans le cône de tôle (appelé « plug ») puis vers l'ambiant via une ouverture dudit plug. Ainsi, l'air huilé, prélevé sur le compresseur, est directement remis à l'extérieur du moteur.

Toutefois, la technique antérieure précitée présente l'inconvénient de nécessiter une masse supplémentaire significative, du fait du capot de fermeture et des différents orifices. En outre, l'air destiné à ventiler le capot de fermeture travaille dans la turbine sur toutes les phases de vol, ce qui contribue à une baisse de rendement du moteur.

L'invention a pour but de remédier à ces inconvénients et propose à cet effet un dispositif de d'évacuation de fuites d'huile, à capotage, qui soit plus léger et qui permette l'évacuation de l'huile sans que le flux d'air nécessaire à l'évacuation ne soit directement perdu, tout en étant moins pénalisant en terme de masse et de performance du moteur qu'un système dit « sump flooding ».

L'invention propose également que ce dispositif d'évacuation d'évacuation de fuites d'huile, en conditions de fonctionnement, ne présente pas de contraintes de ventilation liées aux risques feu (conditions propices à l'établissement d'un feu engendré par l'huile).

A cette fin, selon l'invention, le dispositif d'évacuation de l'huile défini ci-dessus, d'une enceinte d'huile située dans la partie aval d'un moteur à turbine à gaz, ce dispositif comportant :
- des moyens d'évacuation d'huile agencés pour autoriser l'évacuation d'au moins une partie de l'huile contenue dans l'enceinte vers l'extérieur du moteur lorsque le niveau de ladite enceinte dépasse un niveau seuil, et
- des moyens d'entraînement de l'huile aptes à laisser passer un flux d'air dont l'écoulement participe à l'entraînement de l'évacuation de l'huile vers l'extérieur dudit moteur,
   est remarquable par le fait que les moyens d'entraînement comportent :
- un orifice de ventilation pratiqué dans la partie aval dudit moteur de manière que l'huile emprunte ledit orifice, et
- un élément de guidage agencé pour que l'huile, après avoir emprunté ledit orifice de ventilation, soit dirigée vers la zone de purge aval de la turbine basse pression.

On comprendra que l'évacuation de l'huile vers l'extérieur du moteur est assurée non seulement par les moyens d'entraînement précités, mais également par gravité et centrifugation de l'huile respectivement sur des parois stator et rotor.

Ainsi, grâce à l'invention, l'air qui est utilisé pour entraîner l'huile en cas de fuite d'enceinte en dehors du moteur n'est pas directement perdue, puisqu'elle remplit une double fonction. En effet, en plus de l'entraînement de l'huile, le flux d'air est dirigé vers la zone de purge aval de la turbine basse pression. Ce flux y exerce alors une surpression qui empêche l'air provenant de la veine primaire du moteur d'être réintroduit au niveau de l'attache disque-aubage de roue de turbine, risquant une ouverture de l'attache et une libération de l'aubage. Ainsi, le débit de purge initialement prévu peut être limité en y ajoutant ce flux d'air si bien que les prélèvements sur le compresseur peuvent être limités et le rendement du moteur amélioré.

En outre, grâce encore à l'invention, l'entraînement de l'huile jusqu'à l'extérieur de moteur est en grande partie opérée par un orifice de ventilation judicieusement disposé et un élément de guidage. La masse du moteur équipé d'un dispositif selon l'invention est donc augmentée de l'élément de guidage, la matière à partir de laquelle est formée l'orifice de ventilation ainsi que les tubes reliant la cavité sous le capotage et le plug étant au contraire soustraite, ce qui allège globalement le moteur.

De surcroît, on note que l'invention permet bien d'éliminer l'huile excédentaire puisque celle-ci s'écoule alors, par gravité et sous l'effet du flux d'air, vers le point bas du moteur, donc jusque dans la zone de purge de la turbine basse pression où elle est évacuée vers l'arrière du moteur, en évitant l'introduction d'huile dans des cavités où l'environnement aérothermique est propice à l'établissement et au développement d'un feu d'huile. Aucun système de détection de feu n'est à mettre en place (contrairement au système type « perçages de virole ») puisqu'aucune paroi sur le cheminement de l'huile ne permet d'auto-inflammation de l'huile.

De préférence, l'élément de guidage est un capotage joint à la partie aval du moteur. Ce capotage permet d'éviter la présence d'huile en amont du dernier disque de turbine basse pression.

Dans ce cas, selon différentes variantes de l'invention, l'étendue du capotage peut couvrir :
- sensiblement le chemin menant du trou de ventilation à la zone de purge aval de la turbine basse pression, afin de guider de façon optimale l'huile et le flux d'air ; ou
- essentiellement le voisinage du trou de ventilation, afin de minimiser la masse du moteur.

Toujours dans le cas d'un élément de guidage sous la forme d'un capotage, ce dernier peut présenter un profil au moins partiellement circonférentiel (afin d'encercler l'huile et le flux d'air), ou encore au moins sensiblement plan.

Afin d'adapter le dispositif d'évacuation d'huile selon l'invention à la quantité d'huile qu'il est nécessaire d'évacuer lors d'un noyage d'enceinte il peut être prévu que la dimension du trou de ventilation soit adaptée au débit de l'huile à évacuer ou au débit d'air à passer en cas de fonctionnement sans fuite d'huile.

La partie aval du moteur comprend généralement un élément stator aval et un élément rotor de turbine basse pression respectivement en liaison l'un avec l'autre. Dans ce cas, l'enceinte d'huile est avantageusement pratiquée dans l'élément stator aval.

Dans ce cas également, les moyens d'évacuation sont disposés de préférence au niveau d'une première zone d'étanchéité reliant les éléments stator aval et rotor de turbine basse pression, de manière que l'huile soit évacuée en direction de l'élément rotor de turbine basse pression, cette évacuation pouvant se faire sous l'effet de la gravité de façon à acheminer l'huile à évacuer jusque sur l'élément rotor de turbine basse pression, et également sous l'effet du flux d'air.

De préférence, l'orifice de ventilation est pratiqué dans l'élément stator aval afin de permettre la création d'un chemin entre l'enceinte d'huile et la zone de purge.

De préférence également, les moyens d'entraînement comprennent en outre un aménagement de l'élément rotor basse pression, au niveau d'une seconde zone d'étanchéité entre les éléments respectivement stator aval et rotor basse pression, de manière que l'air et/ou l'huile soit dirigée vers l'orifice de ventilation. Cet aménagement - par exemple une pente - facilite le guidage de l'huile vers le trou de ventilation, ce qui permet d'éviter des volumes de rétention d'huile. L'invention concerne également une turbomachine comprenant un dispositif d'évacuation d'huile selon l'un des modes de réalisation ci-dessus.

L'invention sera mieux comprise à l'aide du dessin annexé sur lequel :
- la figure 1 est une vue en coupe d'un moteur à turbine à gaz sur lequel peut être installé le dispositif d'évacuation de l'huile selon l'invention ;
- la figure 2 est un schéma illustrant l'agencement du dispositif d'évacuation de l'huile selon l'invention au niveau de la partie aval du moteur, selon une première forme de réalisation ;
- la figure 3 est un schéma illustrant l'agencement du dispositif d'évacuation d'huile selon l'invention au niveau de la partie aval du moteur, selon une deuxième forme de réalisation ; et
- la figure 4 illustre différentes variantes de réalisation de l'élément de guidage intégré au dispositif d'évacuation d'huile selon l'invention.

Pour une meilleure lisibilité des figures, des références numériques identiques désigneront des éléments techniques similaires.

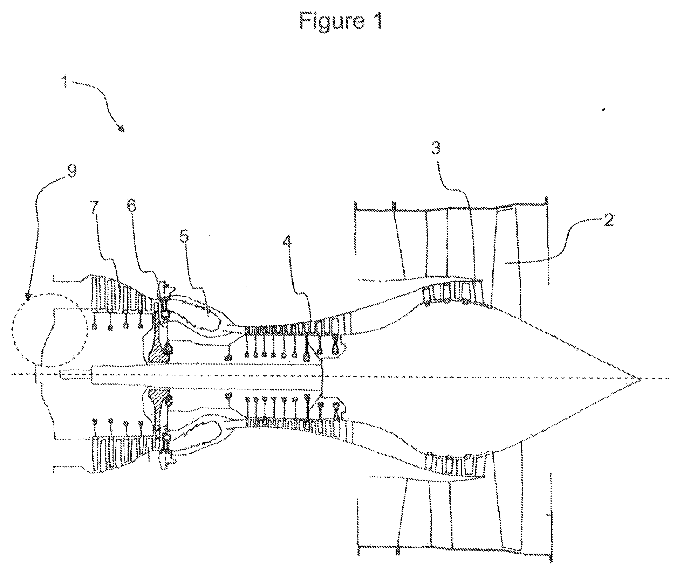

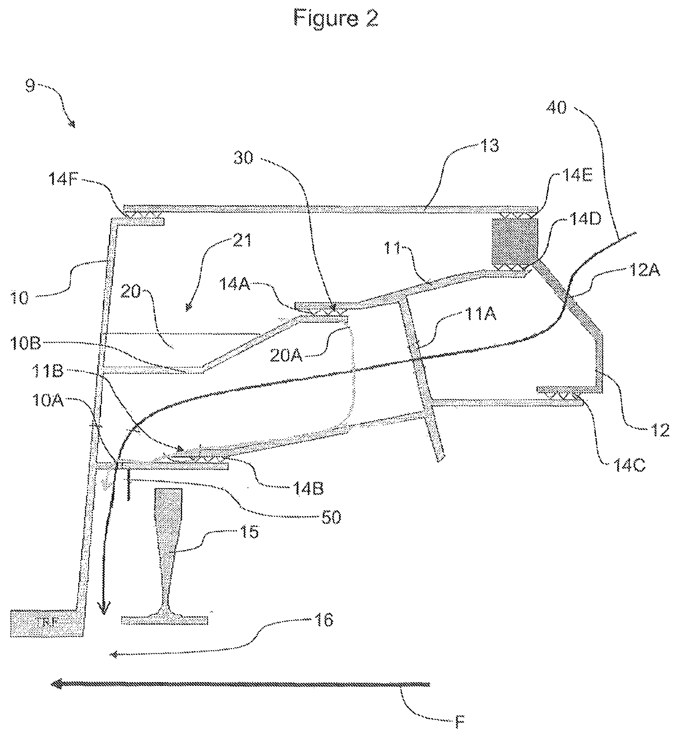

Sur la figure 1, on a représenté schématiquement une vue générale d'un moteur à turbine à gaz, par exemple un turboréacteur d'avion à double flux. Ce moteur 1 comporte, d'avant en arrière, une soufflante 2, un compresseur à basse pression 3, un compresseur à haute pression 4, une chambre de combustion 5, une turbine à haute pression 6 et une turbine à basse pression 7. La partie aval du moteur (représentée plus en détails sur la figure 2), au niveau de laquelle est installé le dispositif d'évacuation d'huile selon l'invention, est désignée par la référence 9.

Sur la figure 2, on a représenté schématiquement un élément stator aval 10, en liaison notamment avec un élément 11 relié au rotor basse pression, ces deux pièces 10 (carter) et 11 (rotor basse pression) étant interfacées l'une à l'autre au niveau de deux étanchéités air-huile 14A et 14B.

La partie aval 9 du moteur 1 comporte en outre une pièce 12 reliée au rotor haute pression, en liaison également avec la pièce 11 par l'intermédiaire d'étanchéité 14C et 14D, et enfin une pièce 13 de revêtement, reliée aux pièces 10 et 12 également par des étanchéités 14E et 14F.

Au niveau d'une partie haute de la pièce stator aval 10, il est formé une enceinte d'huile 21, qui délimite un ou plusieurs paliers successifs du moteur (non représentés). Ces paliers sont lubrifiés par un écoulement d'huile en provenance d'un gicleur dans cette enceinte. La rotation de ces paliers donne naissance à un brouillard d'huile qui remplit l'enceinte 21, cette dernière étant par ailleurs délimitée par un capot d'enceinte pressurisée (10B).

Afin d'assurer l'évacuation d'au moins une partie de l'huile 20 contenue dans l'enceinte d'huile 21, le dispositif d'évacuation d'huile selon l'invention est agencé pour diriger l'huile 20 vers un point bas du moteur, ce point bas correspondant plus particulièrement à une zone de purge 16 du dernier disque 15 de turbine basse pression.

Le dispositif d'évacuation de l'huile comporte tout d'abord des moyens d'évacuation sous la forme d'un un jeu rotor-stator 30, formée par une première étanchéité 14A entre les éléments stator aval 10 et rotor de turbine basse pression 11, disposée à un niveau prédéterminé par rapport au niveau de l'enceinte d'huile 21. Le niveau de ces moyens d'évacuation 30 (ou zone d'étanchéité) est choisi de manière qu'au moins une partie de l'huile 20 contenue dans l'enceinte 21 puisse être évacuée vers l'extérieur du moteur - en particulier sa partie basse - lorsque le niveau de ladite enceinte 21 dépasse un niveau seuil correspondant au niveau de l'étanchéité 14A. De cette manière, il n'est permis d'évacuer l'huile que si le niveau d'huile dans l'enceinte 21 est jugé trop élevé, eu égard à des risques de fuite d'huile due à un noyage d'enceinte ou à un défaut de pressurisation.

Ainsi disposés, les moyens d'évacuation 30 permettent que l'huile excédentaire au point bas moteur 20A soit évacuée au travers de l'étanchéité 14A, puis centrifugée sur la pièce 11 reliée au rotor de turbine basse pression.

Par ailleurs, le dispositif d'évacuation d'huile selon l'invention comprend également des moyens d'entraînement de l'huile, permettant l'acheminement de l'air et entraînant en partie l'huile vers la zone de purge 16 du dernier disque 15 de turbine basse pression en cas de fuite de l'enceinte, qui correspond à la zone vers laquelle il est souhaité d'acheminer cette huile excédentaire 20A.

Ces moyens d'entraînement comportent notamment deux orifices (ou série de trous) 11A et 12A, pratiqués respectivement dans les pièces 11 et 12, ces orifices étant positionnés de manière qu'un flux d'air 40 puisse circuler à travers la zone intermédiaire entre les moyens d'évacuation 30 et la partie basse de la pièce 11 rotor de turbine basse pression, cette zone étant celle dans laquelle l'huile excédentaire 20 est destinée à s'écouler sous l'effet de la gravité. Ce flux d'air 40, lui-même entraîné par des moyens d'injection (non représentés sur la figure 2), permet d'entraîner l'huile 20A le long de la partie basse de la pièce 11, dans la direction aval du moteur. En fonctionnement normal du moteur ces perçages permettent de faire circuler l'air 40 vers la zone de purge 16. L'huile 20A est par ailleurs entraînée le long de la pièce 11 par centrifugation.

On entend ici, ainsi que dans l'ensemble du brevet, respectivement par « amont » et « aval », les parties avant et arrière du moteur 1, par référence à la direction du flux d'air qui traverse ledit moteur, représentée par la flèche F sur la figure 2. Ainsi, l'huile 20A s'écoule le long de la pièce 11, dans la direction aval, et atteint la pièce 10, par l'intermédiaire de la deuxième étanchéité 14B entre lesdites pièces 10 et 11. Pour favoriser cet écoulement, il peut être prévu un aménagement 11B sur la paroi de la pièce 11 sur laquelle s'écoule l'huile 20A, au niveau de la zone de liaison entre les pièces 10 et 11. Cet aménagement peut consister en une pente déterminée de façon que l'huile glisse le long de cette pente et s'achemine ainsi préférentiellement vers la pièce stator aval 10. De la même manière, une pente peut être donnée à la pièce 10 pour que l'huile glisse le long de cette pente et s'achemine ainsi préférentiellement vers l'orifice 10A.

Dans la pièce 10 est pratiqué un orifice (ou trou) de ventilation 10A (qui forme une partie des moyens d'entraînement de l'huile), vers lequel l'huile est entraînée via le flux d'air 40 (et l'éventuelle pente dans la pièce 10 au voisinage trou). Cet orifice 10A peut être par exemple circulaire, avec un diamètre choisi en fonction du débit (préalablement déterminé) d'huile à évacuer.

L'huile excédentaire 20A et le flux d'air 40, dont l'acheminement est décrit ci-dessus, empruntent alors cet orifice 10A pour rejoindre la partie basse du moteur 1 (l'huile étant entraînée sous l'effet de la gravité et du flux d'air 40), et plus particulièrement la zone 16 située à proximité et en aval du dernier disque 15 de la turbine basse pression. L'huile 20A et le flux d'air 40 sont ainsi rejetés du moteur du fait de la force exercée par la poussée du moteur, suivant la flèche F.

Pour faciliter ce rejet vers la zone 16, conformément à l'invention, les moyens d'entraînement comprennent également un capotage 50, joint à la pièce stator 10, au moins partiellement autour de l'orifice de ventilation 10A. Ce capotage remplit une fonction de guidage de l'huile de façon que celui-ci s'achemine préférentiellement en direction de la zone 16. Ainsi, alors que l'huile est effectivement rejetée, le flux d'air 40 peut engendrer une surpression au niveau de la zone de purge 16, de façon à empêcher que de l'air ayant traversé le moteur suivant la flèche F pénètre la zone aval au disque 15, ce qui aurait pour conséquence d'engendrer, dans cette zone, des turbulences susceptibles de dégrader les performances aérodynamiques du moteur 1 et de détériorer l'attache disque-aubage de la dernière roue de turbine basse pression 15.

Le dispositif d'évacuation de l'huile fonctionne ainsi de la façon suivante :
- en fonctionnement normal, il n'y a pas d'huile excédentaire et le flux d'air 40 traverse successivement les trous 12A, 11 A et 10A afin d'engendrer une surpression au niveau de la zone 16, de façon à purger cette zone ;
- lors d'une fuite d'huile (du fait par exemple de la faible pressurisation de l'enceinte d'huile 21 à bas régime, ou lors d'un noyage d'enceinte 20), l'huile excédentaire 20A s'écoule, via les jeux rotor-stator 30 et sous l'effet de la gravité, jusque dans une zone où elle est entraînée par centrifugation sur le rotor 11 et le flux d'air 40 jusque dans l'orifice de ventilation 10A, puis jusque dans la partie basse du moteur où elle est rejetée.

En conséquence de ce qui précède, il apparaît que l'huile est ainsi dirigée vers une zone ne présentant pas les conditions de ventilation et de température propices à l'établissement d'un feu, sans pénaliser pour autant les performances du moteur. De plus, le flux d'air 40 remplit deux fonctions : l'entraînement de l'huile excédentaire en dehors du moteur (lors d'une fuite d'huile) et la purge de la partie aval 16 de la turbine basse pression (en continu), ce qui optimise à la fois l'utilisation de ce flux d'air 40 et sa participation au rendement du moteur.

On comprendra qu'il est préférable, autant que possible, que les moyens d'entraînement du dispositif d'évacuation d'huile selon l'invention soient positionnés au plus près de la pièce stator aval 10, ce qui permet de rediriger la totalité de l'huile vers la veine primaire sans risque de feu.

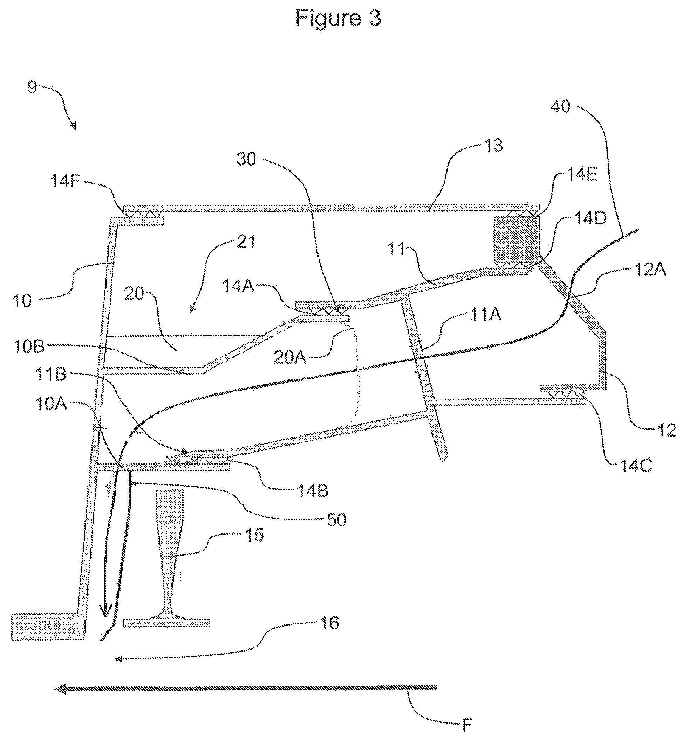

Comme représenté en vue de profil sur la figure 2, le capotage 50 (court) peut être agencé de manière que son étendue couvre essentiellement le voisinage de l'orifice de ventilation 10A, ce qui permet de guider l'huile 20A et le flux d'air 40 au voisinage dudit orifice 10A sans pour autant alourdir excessivement le moteur. Selon une deuxième forme de réalisation de l'invention représentée sur la figure 3, le capotage 50 (long) peut être agencé de manière que son étendue couvre sensiblement le chemin menant du trou de ventilation 10A à la zone de purge aval 16 de la turbine basse pression, afin de guider de façon optimale l'huile et le flux d'air, et également pour que l'écoulement d'huile se produise au plus près de la zone de purge aval 16 de la turbine basse pression.

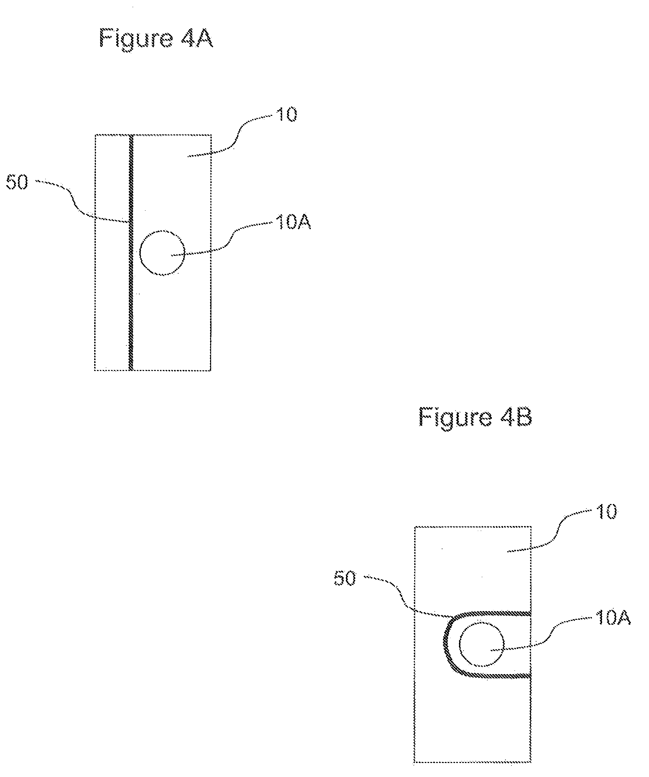

Les schémas 4A et 4B de la figure 4, qui représentent le capotage 50 en vue de dessus, illustrent deux variantes de réalisation de celui-ci, non pas en terme d'étendue (ces variantes s'appliquent indifféremment à un capotage court ou long) mais en terme de forme. Dans la variante du schéma 4A, le capotage 50 est constitué d'une tôle plane réalisée dans le même matériau que l'élément stator aval 10. Dans la variante du schéma 4B, le capotage 50 est formé d'une goulotte semi-circonférentielle intégrée à la pièce 10.

Dans tous les cas, on comprendra que l'élément de guidage 50 doit avoir une épaisseur suffisamment élevée afin ne pas être déformée dans les conditions d'opération du moteur.

L'élément de guidage 50 peut également être entièrement intégré à la pièce 10 afin de minimiser les masses supplémentaires dus à l'assemblage des pièces 10 et 50 (masses des boulons et vis).

## Revendications

1. Dispositif d'évacuation de l'huile d'une enceinte (21) d'huile située dans la partie aval (9) d'un moteur à turbine à gaz (1), dispositif comportant :
- des moyens d'évacuation (30) d'huile agencés pour autoriser l'évacuation d'au moins une partie de l'huile (20) contenue dans l'enceinte vers l'extérieur (16) du moteur lorsque le niveau de ladite enceinte dépasse un niveau seuil, et
- des moyens d'entraînement (11A, 12A) de l'huile aptes à laisser passer un flux d'air (40) dont l'écoulement participe à l'entraînement de l'évacuation de l'huile vers l'extérieur dudit moteur,
**caractérisé en ce que** les moyens d'entraînement comportent :
- un orifice de ventilation (10A) pratiqué dans la partie aval (9) dudit moteur de manière que l'huile emprunte ledit orifice (10A), et
- un élément de guidage (50) agencé pour que l'huile, après avoir emprunté ledit orifice de ventilation (10A), soit dirigée vers la zone de purge aval (16) de la turbine basse pression (15).

2. Dispositif selon la revendication 1, dans lequel l'élément de guidage (50) est un capotage joint à la partie aval (10) du moteur (1).

3. Dispositif selon la revendication 2, dans lequel l'étendue du capotage (50A) couvre sensiblement le chemin menant de l'orifice de ventilation (10A) à la zone de purge aval (16) de la turbine basse pression (15).

4. Dispositif selon la revendication 2 ou 3, dans lequel le capotage (50C) présente un profil au moins sensiblement circonférentiel.

5. Dispositif selon l'une des revendications précédentes, dans lequel la dimension de l'orifice de ventilation (10A) est adaptée au débit de l'huile (20A) à évacuer.

6. Dispositif selon l'une des revendications précédentes, dans lequel, la partie aval (9) comprenant un élément stator aval (10) et un élément rotor de turbine basse pression (11) respectivement en liaison l'un avec l'autre, l'enceinte (21) d'huile est pratiquée dans l'élément stator aval (10).

7. Dispositif selon la revendication 6, dans lequel les moyens d'évacuation (30) sont disposés au niveau d'une première zone d'étanchéité entre les éléments stator aval (10) et rotor de turbine basse pression (11) de manière que l'huile soit évacuée en direction de l'élément rotor basse pression (11).

8. Dispositif selon la revendication 7, dans lequel le trou de ventilation (10A) est pratiqué dans l'élément stator aval (9).

9. Dispositif selon la revendication 8, dans lequel les moyens d'entraînement (30) comprennent en outre un aménagement de l'élément rotor de turbine basse pression (11), au niveau d'une seconde zone d'étanchéité entre les éléments respectivement stator aval (10) et rotor de turbine basse pression (11), de manière que l'air et/ou l'huile soit dirigée vers l'orifice de ventilation (10A).

10. Turbomachine (1) comprenant un dispositif d'évacuation d'huile selon l'une des revendications précédentes.

## Patentansprüche

1. Austragsvorrichtung des Öls eines Ölbehälters (21), der sich in dem nachgeschalteten Teil (9) eines Motors mit Gasturbine (1) befindet, wobei die Vorrichtung:
- Ölaustragsmittel (30), die angeordnet sind, um den Austrag wenigstens eines Teils des in dem Behälter enthaltenen Öls (20) zur Außenseite (16) des Motors zu erlauben, wenn das Niveau des genannten Behälters ein Schwellenniveau übersteigt, und
- Mitnahmemittel (11A, 12A) des Öls, die geeignet sind, einen Luftstrom (40) durchzulassen, dessen Abströmen zur Mitnahme des Austrags des Öl zur Außenseite des genannten Motors beiträgt, umfasst,
**dadurch gekennzeichnet, dass** die Mitnahmemittel:
- eine Belüftungsöffnung (10A), die in dem nachgeschalteten Teil (9) des genannten Motors derart praktiziert ist, dass das Öl die genannte Öffnung (10A) nimmt, und
- ein Führungselement (50), das angeordnet ist, damit das Öl, nachdem es die genannte Belüftungsöffnung (10A) genommen hat, zum nachgeschalteten Ablassbereich (16) der Niederdruckturbine (15) geleitet wird, umfassen.

2. Vorrichtung gemäß Anspruch 1, bei der das Führungselement (50) eine Verkleidung ist, die dem nachgeschalteten Teil (10) des Motors (1) beigefügt ist.

3. Vorrichtung gemäß Anspruch 2, bei der der Umfang der Verkleidung (50A) deutlich den Weg abdeckt, der von der Belüftungsöffnung (10A) zum nachgeschalteten Ablassbereich (16) der Niederdruckturbine (15) führt.

4. Vorrichtung gemäß Anspruch 2 oder 3, bei der die Verkleidung (50C) ein Profil aufweist, das wenigstens deutlich umlaufend ist.

5. Vorrichtung gemäß einem der voranstehenden Ansprüche, bei der die Abmessung der Belüftungsöffnung (10A) an den Durchsatz des auszutragenden Öls (20A) angepasst ist.

6. Vorrichtung gemäß einem der voranstehenden Ansprüche, bei der der nachgeschaltete Teil (9) ein nachgeschaltetes Statorelement (10) und ein Rotorelement der Niederdruckturbine (11) umfasst, die jeweils miteinander in Verbindung stehen, wobei der Ölbehälter (21) in dem nachgeschalteten Statorelement (10) praktiziert ist.

7. Vorrichtung gemäß Anspruch 6, bei der die Austragsmittel (30) in einem ersten Abdichtungsbereich zwischen den nachgeschalteten Statorelementen (10) und dem Rotor der Niederdruckturbine (11) derart angeordnet sind, dass das Öl in Richtung des Niederdruckrotorelements (11) ausgetragen wird.

8. Vorrichtung gemäß Anspruch 7, bei der das Belüftungsloch (10A) in dem nachgeschalteten Statorelement (9) praktiziert ist.

9. Vorrichtung gemäß Anspruch 8, bei der die Mitnahmemittel (30) darüber hinaus eine Anordnung des Rotorelements der Niederdruckturbine (11) in einem zweiten Abdichtungsbereich jeweils zwischen dem nachgeschalteten Stator (10) und dem Rotor der Niederdruckturbine (11) derart umfassen, dass die Luft und / oder das Öl zur Belüftungsöffnung (10A) geleitet wird.

10. Turbomaschine (1), umfassend eine Ölaustragsvorrichtung gemäß einem der voranstehenden Ansprüche.

## Claims

1. A device for discharging oil from an oil chamber (21) situated in the downstream part (9) of a gas turbine engine (1), the device comprising:
- oil discharge means (30) designed to allow at least some of the oil (20) contained in the chamber to be discharged to outside (16) the engine when the level in said chamber exceeds a threshold level, and
- oil entrainment means (11A, 12A) able to allow through a stream (40) of air the flow of which contributes to driving the discharge of oil to outside said engine, **characterized in that** the entrainment means comprise:
- a vent orifice (10A) made in the downstream part (9) of said engine so that the oil takes said orifice (10A), and
- a guide element (50) arranged so that the oil, having taken said vent orifice (10A), is directed toward the downstream bleed zone (16) of the low-pressure turbine (15).

2. The device as claimed in claim 1, in which the guide element (50) is a cowling attached to the downstream part (10) of the engine (1).

3. The device as claimed in claim 2, in which the extent of the cowling (50A) covers substantially the path leading from the vent orifice (10A) to the downstream bleed zone (16) of the low-pressure turbine (15).

4. The device as claimed in claim 2 or 3, in which the cowling (50C) has an at least substantially circumferential profile.

5. The device as claimed in one of the preceding claims, in which the dimension of the vent orifice (10A) is adapted to suit the flow rate of oil (20A) to be discharged.

6. The device as claimed in one of the preceding claims, in which, with the downstream part (9) comprising a downstream stator element (10) and a low-pressure turbine rotor element (11) respectively connected to one another, the oil chamber (21) is made in the downstream stator element (10).

7. The device as claimed in claim 6, in which the discharge means (30) are arranged at a first zone of sealing between the downstream stator element (10) and low-pressure turbine rotor element (11) so that the oil is discharged toward the low-pressure rotor element (11).

8. The device as claimed in claim 7, in which the vent hole (10A) is made in the downstream stator element (9).

9. The device as claimed in claim 8, in which the entrainment means (30) further comprise a configuring of the low-pressure turbine rotor element (11), in a second zone of sealing between the downstream stator element (10) and low-pressure turbine rotor element (11) respectively, so that the air and/or the oil is directed toward the vent orifice (10A).

10. A turbomachine (1) comprising an oil discharge device as claimed in one of the preceding claims.
